(19) Europäisches Patentamt
European Patent Office
Office européen des brevets

(11) EP 1 003 375 B1

# (12) FASCICULE DE BREVET EUROPEEN

(45) Date de publication et mention de la délivrance du brevet:
**06.11.2002 Bulletin 2002/45**

(21) Numéro de dépôt: **97953972.3**

(22) Date de dépôt: **30.12.1997**

(51) Int Cl.[7]: **A01N 43/50**
// A01N43:50, A01N37:20

(86) Numéro de dépôt international:
**PCT/FR97/02449**

(87) Numéro de publication internationale:
**WO 99/034677 (15.07.1999 Gazette 1999/28)**

(54) **NOUVELLE COMPOSITION FONGICIDE COMPRENANT UNE 2-IMIDAZOLINE-5-ONE**
EIN 2-IMIDAZOL-5-ON ENTHALTENDE, NEUE FUNGIZIDE ZUSAMMENSETZUNG
NOVEL FUNGICIDAL COMPOSITION COMPRISING 2-IMIDAZOLINE-5-ONE

(84) Etats contractants désignés:
**AT BE CH DE DK ES FR GB GR IE IT LI LU NL PT SE**

(43) Date de publication de la demande:
**31.05.2000 Bulletin 2000/22**

(73) Titulaire: **AVENTIS CROPSCIENCE S.A.**
**69009 Lyon (FR)**

(72) Inventeurs:
- **CHAZALET, Maurice**
  **F-69480 Anse (FR)**
- **LATORSE, Marie-Pascale**
  **F-69210 Sourcieux les Mines (FR)**
- **MERCER, Richard**
  **F-69130 Ecully (FR)**

(56) Documents cités:
**EP-A- 0 600 629**
**EP-A- 0 753 258**
**WO-A-96/03044**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 003 375 B1

## Description

La présente invention a pour objet de nouvelles compositions fongicides comprenant une 2-imidazoline-5-one, destinées notamment à la protection des cultures. Elle concerne également un procédé pour protéger les cultures contre les maladies fongiques.

On connaît, notamment par la demande de brevet européen EP 551048, des composés dérivés de 2-imidazoline-5-ones à action fongicide, permettant de prévenir la croissance et le développement de champignons phytopathogènes qui attaquent ou sont susceptibles d'attaquer les cultures.

La demande de brevet internationale WO 96/03044 donne également à connaître un certain nombre de compositions fongicides comprenant une 2-imidazoline-5-one en association avec une ou plusieurs matières actives fongicides.

Cependant, il est toujours souhaitable d'améliorer les produits utilisables par l'agriculteur pour lutter contre les maladies fongiques des cultures, et notamment contre les mildious.

Il est également toujours souhaitable de réduire les doses de produits chimiques épandus dans l'environnement pour lutter contre les attaques fongiques des cultures, notamment en réduisant les doses d'application des produits.

Il est enfin toujours désirable d'augmenter le nombre de produits antifongiques à la disposition de l'agriculteur afin que celui-ci trouve parmi eux le mieux adapté à son usage particulier.

Un but de l'invention est donc de fournir une nouvelle composition fongicide, utile pour les problèmes exposés ci-dessus.

Un autre but de l'invention est de proposer une nouvelle composition fongicide utile dans le traitement préventif et curatif des maladies des solanacées.

Un autre but de l'invention est de proposer une nouvelle composition fongicide présentant une efficacité améliorée contre le mildiou et/ou l'alternariose des solanacées.

Un autre but de l'invention est de proposer une nouvelle composition fongicide présentant une efficacité améliorée contre le mildiou et/ou l'oïdium et/ou le botrytis de la vigne.

Il a maintenant été trouvé que ces buts pouvaient être atteints en totalité ou en partie grâce aux compositions fongicides selon la présente invention.

La présente invention a donc pour objet en premier lieu des compositions fongicides comprenant un composé (I) de formule :

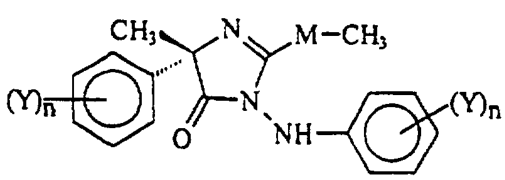

(I)

dans laquelle :

- M représente un atome d'oxygène ou de soufre ;
- n est un nombre entier égal à 0 ou 1 ;
- Y est un atome de fluor ou de chlore, ou un radical méthyle ;

et un composé (II) ou N-[3'-(1'-chloro-3'-méthyl-2'-oxopentan)]-3,5-dichloro-4-méthylbenzamide ;
le rapport composé (I)/composé (II) étant compris entre 0,01 et 50, de préférence entre 0,1 et 10.

Les compositions selon l'invention sont avantageuses pour lutter notamment contre les mildious des solanacées, telles que les pommes de terre ou les tomates, ainsi que contre le mildiou et l'oïdium de la vigne.

Le composé (I) est connu, notamment par la demande de brevet EP 629616.

Le composé (II) et son utilisation comme fongicide sont décrits dans la demande de brevet européen EP 600629.

Le rapport composé (I)/composé (II) est défini comme étant le rapport du poids de ces 2 composés. Il en est de même pour tout rapport de 2 composés chimiques, ultérieurement mentionné dans le présent texte, dans la mesure où une définition différente de ce rapport n'est pas expressément indiquée.

Ces compositions améliorent généralement de façon notable l'action respective et isolée du composé (I) et

du composé (II) pour un certain nombre de champignons particulièrement nuisibles dans les cultures, notamment pour les solanacées, plus particulièrement pour le mildiou des solanacées, tout en conservant une absence de phytotoxicité vis-à-vis de ces cultures. Il en découle donc une amélioration du spectre d'activité et une possibilité de diminuer la dose respective de chaque matière active utilisée, cette dernière qualité étant particulièrement importante pour des raisons écologiques aisément compréhensibles.

On préfère les compositions fongicides selon l'invention pour lesquelles le composé (I) est le composé de formule (I) dans laquelle M est un atome de soufre et n est égal à 0, encore appelé la (4-S) 4-méthyl-2-méthylthio-4-phényl-1-phénylamino-2-imidazoline-5-one.

Dans les compositions selon l'invention, le rapport composé (I)/composé (II) est avantageusement choisi de manière à produire un effet synergique. On entend par effet synergique notamment celui défini par Colby S.R. dans un article intitulé "Calcul des réponses synergiques et antagonistes des combinaisons herbicides" paru dans la revue Weeds, 1967, 15, p. 20-22. Ce dernier article utilise la formule :

$$E = X + Y - XY/100$$

dans laquelle E représente le pourcentage attendu d'inhibition de la maladie pour l'association des deux fongicides à des doses définies (par exemple égales respectivement à x et y), X est le pourcentage d'inhibition observé de la maladie par le composé (I) à une dose définie (égale à x), Y est le pourcentage d'inhibition observé de la maladie par le composé (II) à une dose définie (égale à y). Quand le pourcentage d'inhibition observé de l'association est plus grand que E, il y a effet synergique.

On entend également par effet synergique celui défini par l'application de la méthode de Tammes, "Isoboles, a graphic représentation of synergism in pesticides" Netherlands Journal of Plant Pathology, 70(1964), p. 73-80.

Les domaines de rapport composé (I)/composé (II) indiqués ci-dessus ne sont nullement limitatifs de la portée de l'invention, mais sont plutôt cités à titre indicatif, l'homme du métier étant tout à fait en mesure d'effectuer des essais complémentaires pour trouver d'autres valeurs du rapport de doses de ces 2 composés, pour lesquels un effet synergique est observé.

Les compositions selon l'invention, comprenant le composé (I) et le composé (II), permettent d'observer des propriétés synergiques tout à fait remarquables.

Selon une variante des compositions selon l'invention, le rapport composé (I)/composé (II) est avantageusement compris entre 0,01 et 10, de préférence entre 0,2 et 5, encore plus préférentiellement entre 0,3 et 3.

Outre le composé (I) et le composé (II), les compositions selon l'invention comprennent un support inerte convenable en agriculture et éventuellement un tensio actif convenable en agriculture. Dans ce qui suit, on désigne par le terme de matière active la combinaison du composé (I) avec le composé (II), et les pourcentages cités sont, sauf mention contraire, des pourcentages poids/poids.

Par le terme "support", dans le présent exposé, on désigne une matière organique ou minérale, naturelle ou synthétique, avec laquelle la matière active est associée pour faciliter son application sur la plante ou sur le sol. Ce support est donc généralement inerte et il doit être acceptable en agriculture, notamment sur la culture traitée. Le support peut être solide (notamment : argiles, silicates naturels ou synthétiques, silice, résines, cires, engrais solides) ou liquide (notamment : eau, alcools, cétones, fractions de pétrole, hydrocarbures aromatiques ou paraffiniques, hydrocarbures chlorés, gaz liquéfiés).

L'agent tensioactif peut être un agent émulsionnant, dispersant ou mouillant de type ionique ou non ionique. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés. La présence d'au moins un agent tensioactif est souvent requise parce que la matière active et/ou le support inerte ne sont pas solubles dans l'eau et que l'agent vecteur de l'application est l'eau.

Ces compositions peuvent contenir aussi toute sorte d'autres ingrédients tels que, par exemple, des colloïdes protecteurs, des adhésifs, des épaississants, des agents thixotropes, des agents de pénétration, des stabilisants, des séquestrants, des pigments, des colorants, des polymères.

Plus généralement, les compositions selon l'invention peuvent être associées à tous les additifs solides ou liquides correspondant aux techniques habituelles de formulation agrochimique.

Les techniques d'application sont bien connues de l'homme de métier et elles peuvent être utilisées sans inconvénient dans le cadre de la présente invention. On pourra citer par exemple la pulvérisation.

Parmi les compositions, on peut citer de manière générale les compositions solides ou liquides.

Comme formes de compositions solides, on peut citer les poudres pour poudrage ou dispersion (à teneur en

matière active pouvant aller jusqu'à 100 %) et les granulés, notamment ceux obtenus par extrusion, par compactage, par imprégnation d'un support granulé, par granulation à partir d'une poudre (la teneur en matière active dans ces granulés étant comprise entre 1 et 80 % pour ces derniers cas).

Les compositions peuvent encore être utilisées sous forme de poudre pour poudrage ; on peut ainsi utiliser une composition comprenant 50 g de matière active, 10 g de silice finement divisée, 10 g de pigment organique et 970 g de talc ; on mélange et broie ces constituants et on applique le mélange par poudrage.

Comme formes de compositions liquides ou destinées à constituer des compositions liquides lors de l'application, on peut citer les solutions, en particulier les concentrés solubles dans l'eau, les concentrés émulsionnables, les émulsions, les suspensions concentrées, les aérosols, les poudres mouillables (ou poudre à pulvériser), les pâtes, les granulés dispersables.

Les concentrés émulsionnables ou solubles comprennent le plus souvent 10 à 80 % de matière active, les émulsions ou solutions prêtes à l'application contenant, quant à elles, 0,01 à 20 % de matière active.

Par exemple, en plus du solvant, les concentrés émulsionnables peuvent contenir quand c'est nécessaire, 2 à 20 % d'additifs appropriés comme les stabilisants, les agents tensioactifs, les agents de pénétration, les inhibiteurs de corrosion, les colorants ou les adhésifs précédemment cités.

A partir de ces concentrés, on peut obtenir par dilution avec de l'eau des émulsions de toute concentration désirée.

Les suspensions concentrées, également applicables en pulvérisation, sont préparées de manière à obtenir un produit fluide stable ne se déposant pas et elles contiennent habituellement de 10 à 75 % de matière active, de 0,5 à 15 % d'agents tensioactifs, de 0,1 à 10 % d'agents thixotropes, de 0 à 10 % d'additifs appropriés, comme des pigments, des colorants, des anti-mousses, des inhibiteurs de corrosion, des stabilisants, des agents de pénétration et des adhésifs et, comme support, de l'eau ou un liquide organique dans lequel la matière active est peu ou pas soluble : certaines matières solides organiques ou des sels minéraux peuvent être dissous dans le support pour aider à empêcher la sédimentation ou comme antigels pour l'eau.

Les poudres mouillables (ou poudre à pulvériser) sont habituellement préparées de manière qu'elles contiennent 20 à 95 % de matière active, et elles contiennent habituellement, en plus du support solide, de 0 à 5 % d'un agent mouillant, de 3 à 10 % d'un agent dispersant, et, quand c'est nécessaire, de 0 à 10 % d'un ou plusieurs stabilisants et/ou autres additifs, comme des pigments, des colorants, des agents de pénétration, des adhésifs, ou des agents antimottants, colorants, etc...

Pour obtenir ces poudres à pulvériser ou poudres mouillables, on mélange intimement les matières actives dans des mélangeurs appropriés avec les substances additionnelles et on broie avec des moulins ou autres broyeurs appropriés. On obtient par là des poudres à pulvériser dont la mouillabilité et la mise en suspension sont avantageuses ; on peut les mettre en suspension avec de l'eau à toute concentration désirée.

A la place des poudres mouillables, on peut réaliser des pâtes. Les conditions et modalités de réalisation et d'utilisation de ces pâtes sont semblables à celles des poudres mouillables ou poudres à pulvériser.

Les granulés dispersables sont habituellement préparés par agglomération, dans des systèmes de granulation appropriés, des compositions de type poudre mouillable.

Comme cela a déjà été dit, les dispersions et émulsions aqueuses, par exemple les compositions obtenues en diluant à l'aide d'eau une poudre mouillable ou un concentré émulsionnable selon l'invention, sont comprises dans le cadre général de la présente invention. Les émulsions peuvent être du type eau-dans-l'huile ou huile-dans-l'eau et elles peuvent avoir une consistance épaisse comme celle d'une "mayonnaise".

Les compositions fongicides selon l'invention contiennent habituellement de 0,5 à 95 % de la combinaison du composé (I) et du composé (II).

Il peut s'agir de la composition concentrée c'est-à-dire du produit commercial associant le composé (I) et le composé (II). Il peut s'agir également de la composition diluée prête à être appliquée sur les cultures à traiter. Dans ce dernier cas la dilution à l'eau peut être effectuée soit à partir d'une composition concentrée commerciale renfermant le composé (I) et le composé (II) (ce mélange est appelé " prêt à l'emploi " ou encore " ready mix ", en langue anglaise), soit au moyen du mélange extemporané (appelé en anglais " tank mix ") de deux compositions concentrées commerciales renfermant chacune le composé (I) et le composé (II).

L'invention a enfin pour objet un procédé de lutte, à titre curatif ou préventif, contre les champignons phytopathogènes des cultures, caractérisé en ce que l'on applique aux végétaux à traiter une quantité efficace et non phytotoxique d'une composition fongicide selon l'invention.

Les champignons phytopathogènes des cultures qui peuvent être combattus par ce procédé sont notamment ceux :

- du groupe des oomycètes :

  - du genre *Phytophthora* tel que *Phytophthora infestans* (mildiou des solanées, notamment de la pomme de

terre ou de la tomate),

- de la famille des Péronosporacées, notamment *Plasmopara viticola* ( mildiou de la vigne), *Plasmopara halstedei* (mildiou du tournesol), *Pseudoperonospora sp* (notamment mildiou des cucurbitacées et du houblon), *Bremia lactucae* (mildiou de la laitue), *Peronospora tabacinae* (mildiou du tabac), *Peronospora parasitica* (mildiou du chou),

- du groupe des adélomycètes :

  - du genre *Alternaria*, par exemple *Alternaria solani* (alternariose des solanées, et notamment de la tomate et des pommes de terre ),
  - du genre *Guignardia,* notamment *Guignardia bidwelli* (black rot de la vigne),
  - du genre *Oïdium,* par exemple oïdium de la vigne (*Uncinula necator*) ; oïdium des cultures légumières, par exemple *Erysiphe polygoni* (oidium des crucifères) ; *Leveillula taurica, Erysiphe cichoracearum, Sphaerotheca fuligena*; (oïdium des cucurbitacées, des composées, de la tomate) ; *Erysiphe communis* (oïdium de la betterave et du chou) ; *Erysiphe pisi* (oïdium du pois, de la luzerne) ; *Erysiphe polyphaga* (oïdium du haricot et du concombre) ; *Erysiphe umbelliferarum* (oïdium des ombellifères, notamment de la carotte) ; *Sphaerotheca humuli* (oïdium du houblon).

Par l'expression "on applique aux végétaux à traiter", on entend signifier, au sens du présent texte, que les compositions fongicides objets de l'invention peuvent être appliquées au moyen de différents procédés de traitement tels que :

- la pulvérisation sur les parties aériennes des dits végétaux d'un liquide comprenant une des dites compositions,
- le poudrage, l'incorporation au sol de granulés ou de poudres, l'arrosage, autour des dits végétaux, et dans le cas des arbres l'injection ou le badigeonnage.

La pulvérisation d'un liquide sur les parties aériennes des cultures à traiter est le procédé de traitement préféré.
Par "quantité efficace et non phytotoxique", on entend une quantité de composition selon l'invention suffisante pour permettre le contrôle ou la destruction des champignons présents ou susceptibles d'apparaître sur les cultures, et n'entraînant pour lesdites cultures aucun symptôme de phytotoxicité. Une telle quantité est susceptible de varier dans de larges limites selon le champignon à combattre, le type de culture, les conditions climatiques, et la nature du composé (II) compris dans la composition fongicide selon l'invention. Cette quantité peut être déterminé par des essais systématiques au champ, à la portée de l'homme du métier.
Dans les conditions usuelles de la pratique agricole, une quantité de composition fongicide selon l'invention correspondant à une dose de composé (I) comprise entre 10 et 500 g/ha, de préférence entre 20 et 300 g/ha, donne généralement de bons résultats.
Selon l'invention, la quantité de composition fongicide correspond avantageusement à une dose de composé (II) comprise entre 50 et 500 g/ha, de préférence entre 100 et 300 g/ha.
L'exemple suivant est donné à titre purement illustratif de l'invention, qu'il ne limite en aucune façon.
Dans cet exemple, on entend par composé (I) désigner la (4-S) 4-méthyl-2-méthylthio-4-phényl-1 -phénylamino-2-imidazoline-5-one.

<u>Exemple 1</u> : Essai en plein champ d'une composition comprenant les composés (I) et (II) contre le mildiou de la pomme de terre (*Phythophtora infestans*) :

On utilise une composition comprenant le composé (I) sous forme de suspension concentrée à 500 g/l et une composition comprenant le composé (II) sous forme d'une suspension concentrée à 240 g/l.
Ces 2 compositions sont mélangées de manière à obtenir un ratio : composé (I)/composé (II) égal à 1 et 1,5.
Le mélange est appliqué après dilution à l'eau à raison de 800 l/ha sur un champ de pommes de terre 40 jours après la plantation des tubercules. Les doses appliquées sont :

- pour le ratio 1 : 150 g/ha pour le composé (I) et 150 g/ha pour le composé (II) ;
- pour le ratio 1,5 : 150 g/ha pour le composé (I) et 100 g/ha pour le composé (II.)

Cette application est répétée 6 fois tous les 7 jours.
Deux jours après la première application, on procède à la contamination par pulvérisation des spores de *Phythophtora infestans.*
On procède à l'observation des résultats 22 jours après la 7ème application. Pour cela on évalue de manière

visuelle (par rapport à une parcelle non traitée mais également contaminée) la contamination C (ou encore degré d'attaque) exprimée par la fraction de surface foliaire (exprimée en %) présentant des tâches noirâtres correspondant à l'attaque de la maladie.

On calcule l'efficacité E selon la formule de Abbott.

On a obtenu d'excellents résultats d'efficacité avec effet synergique :

Une parcelle voisine traitée par du mancozèbe à raison de 1600 g/ha a donné lieu à une efficacité d'environ moitié.

## Revendications

1. Compositions fongicides comprenant un composé (I) de formule :

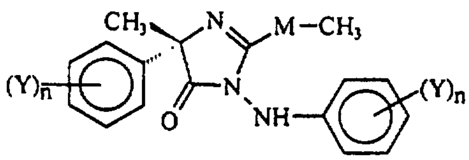

(I)

dans laquelle :

- M représente un atome d'oxygène ou de soufre ;
- n est un nombre entier égal à 0 ou 1 ;
- Y est un atome de fluor ou de chlore, ou un radical méthyle ;

et un composé (II) ou N-[3'-(1'-chloro-3'-méthyl-2'-oxopentan)]-3,5-dichloro-4-méthylbenzamide ;
le rapport composé (I)/composé (II) étant compris entre 0,01 et 50, de préférence entre 0,1 et 10.

2. Compositions fongicides selon la revendication 1, **caractérisées en ce que** le composé (I) est la (4-S) 4-méthyl-2-méthylthio-4-phényl-1-phénylamino-2-imidazoline-5-one.

3. Compositions fongicides selon l'une des revendications 1 ou 2, **caractérisées en ce que** le rapport composé (I) /composé (II) est choisi de manière à produire un effet synergique.

4. Compositions fongicides selon l'une des revendications 1 à 3, **caractérisées en ce que** le rapport composé (I)/ composé (II) est compris entre 0,01 et 10, de préférence entre 0,2 et 5, encore plus préférentiellement entre 0,3 et 3.

5. Compositions fongicides selon l'une des revendications 1 à 4, **caractérisées en ce qu'**elles comprennent outre les composés (I) et (II) un support inerte convenable en agriculture et éventuellement un tensio actif convenable en agriculture.

6. Compositions fongicides selon l'une des revendications 1 à 5, **caractérisées en ce qu'**elles comprennent de 0,5 à 95 % de la combinaison du composé (I) et du composé (II).

7. Procédé de lutte contre les champignons phytopathogènes des cultures en un lieu, consistant à appliquer au dit-lieu un composé (I) et un composé (II) tels que définis dans la revendication 1.

8. Procédé de lutte, à titre curatif ou préventif, contre les champignons phytopathogènes des cultures, **caractérisé en ce que** l'on applique aux végétaux à traiter une quantité efficace et non phytotoxique d'une composition fongicide selon l'une des revendications 1 à 6.

9. Procédé selon la revendication 8, **caractérisé en ce que** la composition fongicide est appliquée par pulvérisation d'un liquide sur les parties aériennes des cultures à traiter.

**10.** Procédé selon l'une des revendications 8 ou 9, **caractérisé en ce que** la quantité de composition fongicide correspond à une dose de composé (I) comprise entre 10 et 500 g/ha, de préférence entre 20 et 300 g/ha.

**11.** Produit comprenant un composé de formule (I) et un composé de formule (II) selon la revendication 1 en tant que préparation combinée pour utilisation simultanée, séparée ou séquentielle dans la lutte contre les champignons phytopathogènes des cultures en un lieu.

**Patentansprüche**

**1.** Fungizide Zusammensetzungen, die eine Verbindung (I) der folgenden Formel:

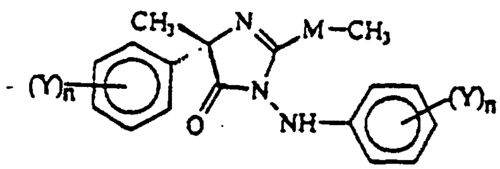

(I),

worin:

- M ein Sauerstoffatom oder ein Schwefelatom bedeutet;
- n eine ganze Zahl 0 oder 1 ist; und
- Y Fluor, Chlor oder Methyl bedeutet;

und als Verbindung (II) N-[3'-(1'-Chlor-3'-methyl-2'-oxopentan)]-3,5-dichlor-4-methylbenzamid enthalten, wobei das Verhältnis Verbindung (I)/Verbindung (II) im Bereich von 0,01 bis 50 und vorzugsweise 0,1 bis 10 liegt.

**2.** Fungizide Zusammensetzungen nach Anspruch 1, **dadurch gekennzeichnet, daß** die Verbindung (I) das (4-S) 4-Methyl-2-methylthio-4-phenyl-1-phenylamino-2-imidazolin-5-on ist.

**3.** Fungizide Zusammensetzungen nach einem der Ansprüche 1 oder 2, **dadurch gekennzeichnet, daß** das Verhältnis Verbindung (I)/Verbindung (II) so ausgewählt ist, daß ein synergistischer Effekt auftritt.

**4.** Fungizide Zusammensetzungen nach einem der Ansprüche 1 bis 3, **dadurch gekennzeichnet, daß** das Verhältnis Verbindung (I)/Verbindung (II) im Bereich von 0,01 bis 10, vorzugsweise 0,2 bis 5 und noch bevorzugter im Bereich von 0,3 bis 3 liegt.

**5.** Fungizide Zusammensetzungen nach einem der Ansprüche 1 bis 4, **dadurch gekennzeichnet, daß** sie neben den Verbindungen (I) und (II) einen für die Landwirtschaft geeigneten inerten Träger und gegebenenfalls einen für die Landwirtschaft geeigneten grenzflächenaktiven Stoff enthalten.

**6.** Fungizide Zusammensetzungen nach einem der Ansprüche 1 bis 5, **dadurch gekennzeichnet, daß** sie 0,5 bis 95 % der Kombination von Verbindung (I) und Verbindung (II) enthalten.

**7.** Verfahren zur Bekämpfung phytopathogener Pilze an Kulturen in einem Gebiet, das darin besteht, in diesem Gebiet eine Verbindung (I) und eine Verbindung (II) nach Anspruch 1 auszubringen.

**8.** Verfahren zur kurativen oder protektiven Bekämpfung von phytopathogenen Pilzen an Kulturen, **dadurch gekennzeichnet, daß** auf die zu behandelnden Pflanzen eine wirksame und nicht phytotoxische Menge einer fungiziden Zusammensetzung nach einem der Ansprüche 1 bis 6 aufgebracht wird.

**9.** Verfahren nach Anspruch 8, **dadurch gekennzeichnet, daß** die fungizide Zusammensetzung durch Spritzen einer Flüssigkeit auf die oberirdischen Teile der zu behandelnden Kulturen aufgebracht wird.

**10.** Verfahren nach einem der Ansprüche 8 oder 9, **dadurch gekennzeichnet, daß** die Menge der fungiziden Zusammensetzung einer Dosis der Verbindung (I) im Bereich von 10 bis 500 g/ha und vorzugsweise 20 bis 300 g/ha entspricht.

**11.** Produkt, das eine Verbindung der Formel (I) und eine Verbindung der Formel (II) nach Anspruch 1 enthält, als Kombinationspräparat zur gleichzeitigen, getrennten oder zeitlich aufeinanderfolgenden Verwendung bei der Bekämpfung phytopathogener Pilze an Kulturen in einem Gebiet.

**Claims**

**1.** Fungicidal compositions comprising a compound (I) of formula:

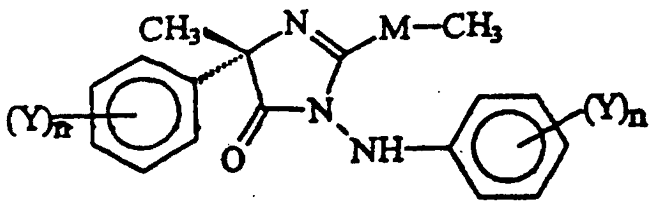

(I)

in which:

- M represents an oxygen or sulphur atom;
- n is an integer equal to 0 or 1;
- Y is a fluorine or chlorine atom or a methyl radical;

and a compound (II) or N-[3'-(1'chloro-3'-methyl-2'-oxopentan)]-3,5-dichloro-4-methylbenzamide;
the compound (I)/compound (II) ratio being between 0.01 and 50, preferably between 0.1 and 10.

**2.** Fungicidal compositions according to Claim 1, **characterized in that** the compound (I) is (4S)-4-methyl-2-methylthio-4-phenyl-1-phenylamino-2-imidazolin-5-one.

**3.** Fungicidal compositions according to either of Claims 1 and 2, **characterized in that** the compound (I)/compound (II) ratio is chosen so as to produce a synergistic effect.

**4.** Fungicidal compositions according to one of Claims 1 to 3, **characterized in that** the compound (I)/compound (II) ratio is between 0.01 and 10, preferably between 0.2 and 5 and even more preferably between 0.3 and 3.

**5.** Fungicidal compositions according to one of Claims 1 to 4, **characterized in that** they comprise, in addition to compounds (I) and (II), an agriculturally suitable inert support and optionally an agriculturally suitable surfactant.

**6.** Fungicidal compositions according to one of Claims 1 to 5, **characterized in that** they comprise from 0.5 to 95% of the combination of compound (I) and compound (II).

**7.** Process for combating the phytopathogenic fungi of crops at a site, which consists in applying onto the said site a compound (I) and a compound (II) as defined in Claim 1

**8.** Process for curatively or preventively combating the phytopathogenic fungi of crops, **characterized in that** an effective and non-phytotoxic amount of a fungicidal composition according to one of Claims 1 to 6 is applied to the vegetation to be treated.

**9.** Process according to Claim 8, **characterized in that** the fungicidal composition is applied by spraying a liquid onto the aerial parts of the crops to be treated.

**10.** Process according to either of Claims 8 and 9, **characterized in that** the amount of fungicidal composition corresponds to a dose of compound (I) of between 10 and 500 g/ha, preferably between 20 and 300 g/ha.

**11.** Product comprising a compound of formula (I) and a compound of formula (II) according to Claim 1, as a combined preparation for simultaneous, separate or sequential use in combating the phytopathogenic fungi of crops at a site.